Europäisches Patentamt

European Patent Office

Office européen des brevets

(19)

(11) Veröffentlichungsnummer: **0 126 482**
**B1**

(12) **EUROPÄISCHE PATENTSCHRIFT**

(45) Veröffentlichungstag der Patentschrift: **22.08.90**

(21) Anmeldenummer: **84105785.4**

(22) Anmeldetag: **21.05.84**

(51) Int. Cl.⁵: **H 04 L 12/54,** H 04 M 11/06, H 04 Q 11/04

(54) Telekommunikationssystem sowohl für Stream-Verkehr als auch für Burst-Verkehr.

(30) Priorität: **24.05.83 DE 3318814**

(43) Veröffentlichungstag der Anmeldung:
**28.11.84 Patentblatt 84/48**

(45) Bekanntmachung des Hinweises auf die Patenterteilung:
**22.08.90 Patentblatt 90/34**

(84) Benannte Vertragsstaaten:
**AT BE CH DE FR GB IT LI NL SE**

(56) Entgegenhaltungen:
EP-A-0 075 998
EP-A-0 126 413
EP-A-0 127 138

ELECTRICAL COMMUNICATIONS, Band 56, Nr. 1, 1981, Seiten 44-56, New York, US; G. TOLUSSO et al.: "Application of distributed control to handling non-voice services"

(73) Patentinhaber: **Siemens Aktiengesellschaft**
**Wittelsbacherplatz 2**
**D-8000 München 2 (DE)**

(72) Erfinder: **Gerke, Peter, Dipl.-Ing.**
**Schiltbergstrasse 1**
**D-8032 Gräfelfing (DE)**

(56) Entgegenhaltungen:
**INTERNATIONAL SWITCHING SYMPOSIUM, Montreal, CA, 21.-25. September 1981, Seiten 1-8, US; R. MONTEMURRO et al.: "Costumer access to the ISDN facilities"**

## Beschreibung

In der neueren Telekommunikationstechnik, insbesondere in der Bürokommunikation, treten zwei in ihrer Charakteristik sehr unterschiedliche Kommunikationskategorien auf: Zum einen der sog. Stream-Verkehr mit dem Profil etwa des Fernsprechverkehrs mit Verbindungsdauern in der Größenordnung von Minuten, Bitraten etwa von 64 bzw. 160 kbit/s und relativ geringer Verbindungshäufigkeit; zum anderen der sogenannte Burst-Verkehr mit Kommunikationsdauern in der Größenordnung von Millisekunden, Bitraten etwa von 10 Mbit/s und großer Verbindungshäufigkeit.

Dem Stream-Verkehr, wie er etwa zwischen Geräten zur Sprach-, Text- oder Bildkommunikation stattfindet, ist das Prinzip der Kanalvermittlung adäquat, demzufolge unabhängig vom momentanen Kommunikationszustand ein verbindungsindividueller Übertragungskanal jeweils für die Dauer der betreffenden Verbindung durchgeschaltet wird. Dies erfordert entsprechende Verbindungsaufbau- und -abbauzeiten, die indessen bei einem Burst-Verkehr, wie er etwa zur Verbindung von Subsystemen der Daten- und Textverarbeitung stattfindet, nicht tragbar sind, weshalb hier Prinzipien der Paketvermittlung zur Anwendung kommen: Die Nutzinformationspakete, die jeweils die Zieladresse unmittelbar mit sich führen, werden allen am Anschlußnetz angeschlossenen Einrichtungen zugeführt und nur von der von der jeweiligen Zieladresse bezeichneten Empfängereinrichtung aufgenommen.

Für die erste Kommunikationskategorie, d.h. für Stream-Verkehr, ist das diensteintegrierende digitale Fernmeldenetz (ISDN) optimal geeignet, auf das neuere Entwicklungen der Telekommunikationstechnik auf dem Wege über ein digitalisiertes Fernsprechnetz abzielen.

Im diensteintegrierenden Digitalnetz (ISDN) werden in einheitlichen Telekommunikationskanälen beispielsweise mit einer Bitrate von 64 kbit/s (je Übertragungsrichtung) außer Sprache auch Texte, Bilder und Daten übermittelt (übertragen und vermittelt), wobei den Teilnehmern die Nutzung der verschiedenen Telekommunikationsdienste über einen einheitlichen Teilnehmeranschluß ermöglicht wird, an den Endgeräte für Telefonie, Textkommunikation, Bildkommunikation und Datenkommunikation in vielfältigen Konfigurationen anschließbar sind. Der ISDN-Teilnehmeranschluß muß dafür geeignete Grundeigenschaften, beispielsweise hinsichtlich der Bitrate, der Signalisierungsmöglichkeiten und der Reichweite, aufweisen; in der internationalen Diskussion und bei Standardisierungsarbeiten bei CEPT und CCITT hat sich in diesem Zusammenhang insbesondere der sogenannte Basisanschluß (Basic Access) mit der Kanalstruktur B + B + D (je Übertragungsrichtung) herauskristallisiert, worin B ein 64-kbit/s-Kanal ist, der digital codierte Informationen unterschiedlicher Art wie Sprache, Text, Fax, Daten, simultan, von Verbindung zu Verbindung oder innerhalb einer Verbindung alternierend oder fest zugeordnet übertragen kann, und worin D ein (nicht weitervermittelter) 16-kbit/s-Kanal ist, in dem im Nachrichtenmultiplex mit Vorrang Signalisierungszeichen und darüber hinaus Telemetriesignale und langsame, paketorientierte Daten übertragen werden können.

Für die zweite Kommunikationskategorie, d.h. für Burst-Verkehr, kann beispielsweise ein sog. Local Area Network (LAN) vorgesehen sein. Die Einrichtung zweier Kommunikationsnetze ist allerdings entsprechend aufwendig und kompliziert zugleich auch die Kommunikation insgesamt; wünschenswert ist daher eine Möglichkeit, Telekommunikation beider Verkehrsarten in einem einzigen Anschlußnetz abwickeln zu können, und die Erfindung zeigt hierzu einen Weg.

Die Erfindung betrifft ein Telekommunikationssystem sowohl für sog. Stream-Verkehr, insbesondere zwischen Geräten zur Sprach-, Text- und/oder Bildkommunikation, als auch für sog. Burst-Verkehr, insbesondere zwischen Geräten zur Daten- und/oder Textverarbeitung; dieses Telekommunikationssystem ist erfindungsgemäß dadurch gekennzeichnet, daß es Mittel aufweist, die bewirken, daß in einem diensteintegrierenden Digitalnetz mit an eine Digitalvermittlungsstelle angeschlossenen, durch Zweikanal-Basisanschlüsse gegebenen ISDN-Teilnehmeranschlüssen jeweils der eine der beiden Nutzkanäle eines ISDN-Teilnehmeranschlusses zur fallweisen Abwicklung von Stream-Verkehrsverbindungen in einer Koppeleinrichtung der Digitalvermittlungsstelle jeweils für die Dauer der betreffenden Verbindung zu dem entsprechenden jeweils einen Nutzkanal des an der betreffenden Verbindung beteiligten anderen ISDN-Teilnehmeranschlusses durchgeschaltet wird und der andere der beiden Nutzkanäle des ISDN-Teilnehmeranschlusses über eine Koppeleinrichtung der Digitalvermittlungsstelle mit den entsprechenden jeweils anderen Nutzkanälen weiterer ISDN-Teilnehmeranschlüsse dauernd zu einem dem Burst-Verkehr dienenden Netzwerk zusammengeschaltet ist.

Ein ähnliches System ist in der parallelen Anmeldung EP—A—126 413 (Prioritätsdatum 19.5.83, Publikationsdatum 28.11.84) beschrieben.

Es sei an dieser Stelle bemerkt, daß es (aus Proceedings International Conference on Local Computer Networks, Florenz 1982, S.23 ... 37) bekannt ist, in einem optischen Ringsystem einen Zeitrahmen in zwei Unterrahmen aufzuteilen, in deren erstem Stream-Verkehr abgewickelt wird, während im zweiten Unterrahmen Datenpakete übertragen werden.

Des weiteren ist (aus der EP—A—0054077) ein Ringsystem ohne rahmensynchrone Zeitschlitzstruktur bekannt, in dem neben einem Burst-Verkehr in eingeschränkter Form auch Stream-Verkehr möglich ist.

Ein anderes (in der deutschen Patentanmeldung DE—A—33 04 823.1 angegebenes) Kommunikationsverfahren für sowohl Stream-Verkehr als auch Burst-Verkehr sieht vor, daß die Signale beider Verkehr sarten über ein mit allen Anschlußstellen verbundenes gemeinsames Übertragungsleitungsbündel in einem in wenigstens zwei Unterrahmen unterteilten Pulsrahmen übertragen werden, wobei im ersten Unterrahmen die von einer Mehrzahl von Zeitfächern gebildeten Einzelkanäle voneinander unabhängig für über das Übertragungsleitungsbündel geführten Stream-Verkehr, insbesondere Sprachkommunikation, belegbar sind, während die Zeitfächer des zweiten Unterrahmens einen einzigen Datenkanal für die Übertragung von Datenpaketen über dasselbe Übertragungsleitungsbündel bilden.

Diese bekannten Verfahren beziehen sich indessen lediglich auf den Zugriff zu den jeweils auf der Übertragungsleitung, an die die einzelnen Telekommunikationsgeräte angeschlossen sind, verfügbaren Übertragungskanälen und verbleiben insoweit im Bereich der Übertragung und allenfalls einer dezentralen Vermittlung, lassen aber Probleme einer zentralen Vermittlung in einem diensteintegrierenden Digitalnetz (ISDN) unberührt.

Gerade eine zentrale Vermittlung in einem Telekommunikationssystem sowohl für Stream-Verkehr, insbesondere zwischen Geräten zur Sprach-, Text-, und/oder Bildkommunikation, als auch für Burst-Verkehr, insbesondere zwischen Geräten zur Daten- und/oder Textverarbeitung, ermöglicht aber die Erfindung dadurch, daß in einem diensteintegrierenden Digitalnetz mit an eine Digitalvermittlungsstelle angeschlossenen, durch Zweikanal-Basisanschlüsse gegebenen ISDN-Teilnehmeranschlüssen jeweils der eine der beiden Nutzkanäle eines ISDN-Teilnehmeranschlusses zur fallweisen Abwicklung von Stream-Verkehrsverbindungen in einer Koppeleinrichtung der Digitalvermittlungsstelle jeweils für die Dauer der betreffenden Verbindung zu dem entsprechenden jeweils einen Nutzkanal des an der betreffenden Verbindung beteiligten anderen ISDN-Teilnehmeranschlusses durchgeschaltet wird und der andere der beiden Nutzkanäle des ISDN-Teilnehmeranschlusses über eine Koppeleinrichtung der Digitalvermittlungsstelle mit den entsprechenden jeweils anderen Nutzkanälen weiterer ISDN-Teilnehmeranschlüsse dauernd zu einem dem Burst-Verkehr dienenden Netzwerk zusammengeschaltet ist.

Die Erfindung bringt den Vorteil mit sich, über ein und dieselbe ISDN-Koppeleinrichtung und damit in einem gemeinsamen kanalorientierten Anschlußnetz, nämlich in diensteintegrierenden Digitalnetz (ISDN), Telekommunikation beider Kommunikationskategorien bzw. Verkehrsarten abwickeln zu können.

In weiterer Ausgestaltung der Erfindung kann in einer Zeitmultiplex-Digitalvermittlungsstelle mit einer Zeitkoppelstufe mit einem Wortspeicher, dessen einzelne Speicherzellen einerseits zyklisch angesteuert werden und andererseits von einem Haltespeicher adressenabhängig gesteuert mit einer ihrerseits zyklisch angestesteuerten Supermultiplexschiene verbindbar sind, die Supermultiplexschiene in zwei Teilschienen aufgespalten sein, mit deren einer die Wortspeicherzellen vom Haltespeicher adressenabhängig gesteuert verbindbar sind und deren andere zyklisch angesteuert ist, wobei die beiden Teilschienen über eine von einer zusätzlichen Spalte des Haltespeichers her ansteuerbaren Umschalteeinrichtung einerseits direkt und andererseits über einen eine zusätzliche Speicherzelle enthaltenden Zwischenspeicherzweig miteinander verbindbar sind.

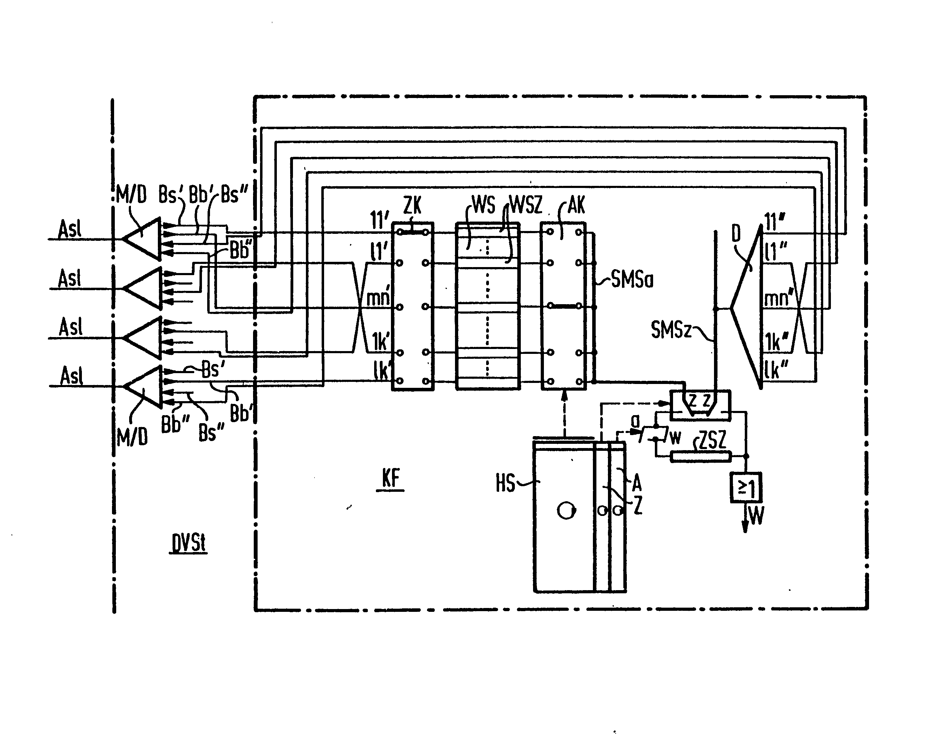

Anhand der Zeichnung sei die Erfindung noch näher erläutert.

In der Zeichnung ist schmatisch in einem zum Verständnis der Erfindung erforderlichen Umfange ein Telekommunikationssystem gemäß der Erfindung dargestellt. Dieses Telekommunikationssystem weist an eine Digitalvermittlungsstelle DVSt angeschlossene ISDN-Teilnehmeranschlüsse Asl auf, die eine wenigstens zwei Nutzkanäle (je Übertragungsrichtung) aufweisende Kanalstruktur haben mögen — wie dies bei dem eingangs erwähnten Basisanschluß mit der Kanalstruktur B + B + D der Fall ist —, wobei die einzelnen Kanäle übertragungsrichtungsgetrennt jeweils zeitlich gebündelt sind. In der Zeichnung ist angedeutet, daß am Eingang/Ausgang der Digitalvermittlungsstelle DVSt, etwa in einer dort vorgesehenen, in der Zeichnung indessen nicht im einzelnen dargestellten Netzabschlußeinheit, die jeweils beiden B-Kanäle Bs', Bb'; Bs'', Bb'' jeder Übertragungsrichtung über einen Multiplexer/Demultiplexer und ggf. auch Serien/Parallel- bzw. Parallel/Serien-Umsetzer M/D an eine Koppeleinrichtung KF der Digitalvermittlungsstelle DVSt herangeführt sind; dabei können die Multiplexer/Demultiplexer M/D über die jeweils beiden B-Kanäle hinaus auch die weiteren im Rahmen der gegebenen Kanalstruktur vorgesehenen Kanäle zusammenfassen bzw. auffächern, ohne daß dies in der Zeichnung noch näher dargestellt werden müßte. Die Zeichnung zeigt übrigens ein räumliches Funktionsbild, das insofern als Ersatzbild zu lesen ist, als die einzelnen Nutzkanäle innerhalb der Digitalvermittlungsstelle DVSt als räumlich voneinander getrennte Kanäle dargestellt sind, während in der Realisierung Nutzkanäle gleicher Übertragungsrichtung auch im Zeitmultiplex auf Zeitmultiplexleitungen zusammengefaßt an die Koppeleinrichtung KF herangeführt sein können.

In der Koppeleinrichtung KF werden die einzelnen in Richtung von den Teilnehmeranschlüssen Asl zur Digitalvermittlungsstelle DVSt führenden Nutzkanäle Bs', Bb' zyklisch nacheinander jeweils mit einer eigenen Speicherzelle WSZ eines Wortspeichers WS verbunden. In dem in der Zeichnung skizzierten Telekommunikationssystem ist hierzu angedeutet, daß ein zyklisch betätigter Koppelschalter ZK die einzelnen Speicherzellen WSZ des Wortspeichers WS nacheinander zyklisch wiederholt mit in der Zeichnung angedeuteten kanalindividuellen Anschlüssen 11'..., l1'..., mn'..., 1k'..., lk' verbindet, so daß die in den einzelnen Nutzkanälen Bs', Bb' übertragenen Digitalworte jeweils in die dem jeweiligen Nutzkanal B' fest zugeordnete Wortspeicherzelle WSZ eingeschrieben werden. Innerhalb eines Pulsrahmens von z.B. 125 µs werden alle Wortspeicherzellen WSZ wieder ausgelesen, wobei jeweils der Lesezyklus vor dem Schreibzyklus abläuft, so daß ein etwaiges Überschreiben eines noch nicht ausgelesenen Digitalwortes durch das im betreffenden B'-Kanal nachfolgende Digitalwort vermieden wird.

Das Auslesen geschieht nicht in einem starren Zyklus, sondern adressiert nach Maßgabe von Wortspeicherzellenadressen, die in die entsprechenden Speicherzellen eines zyklisch betriebenen Haltespeichers HS in in der Zeitmultiplexvermittlungstechnik üblicher Weise eingeschrieben worden sein mögen. In dem in der Zeichnung skizzierten Telekommunikationssystem ist dazu ein von dem Haltespeicher HS adressengesteuerter Koppelschalter AK vorgesehen, der jeweils diejenige Wortspeicherzelle WSZ des Wortspeichers WS, die von der in der im Zuge des Haltespeicherzyklus' gerade angesteuerten Haltespeicherzelle eingespeicherten Wortspeicherzellenadresse bezeichnet wird, mit der nachfolgenden Supermultiplexschiene, und zwar mit deren einer Teilschiene SMSa, verbindet. Die andere Teilschiene SMSz der Supermultiplexschiene wird wiederum zyklisch angesteuert, so daß ein zu einem bestimmten Zeitpunkt auf der Teilschiene SMSz auftretendes Digitalwort in einem ganz bestimmten Nutzkanal B'' der in Richtung von der Digitalvermittlungsstelle DVSt zu den ISDN-Teilnehmeranschlüssen Asl führenden Nutzkanäle Bs'', Bb'' weiterübertragen wird; in der Zeichnung ist hierzu angedeutet, daß ein als Demultiplexer dargestellter Koppelschalter D zyklisch mit in der Zeichnung angedeuteten kanalindividuellen Anschlüssen 11'' ..., l1'' ..., mn'' ..., 1k'' ..., lk'' verbindbar ist.

In der im Vorstehenden umrissenen Weise wird eine sowohl räumliche als auch zeitliche Verbindungsdurchschaltung — in bekannten Zeitmultiplex-Vermittlungseinrichtungen bei zu einer einzigen Supermultiplexschiene zusammenfallenden Teilschienen — bewirkt. In dem Telekommunikationssystem gemäß der vorliegenden Erfindung wird nun zur fallweisen Abwicklung von Stream-Verkehrsverbindungen in einer solchen an sich bekannten Verbindungsschaltung jeweils nur der eine Nutzkanal Bs' der beiden Nutzkanäle Bs, Bb eines sowohl am Stream-Verkehr als auch am Burst-Verkehr teilnehmenden ISDN-Teilnehmeranschlusses Asl jeweils für die Dauer der betreffenden Verbindung zu dem entsprechenden jeweils einen Nutzkanal Bs'' des an der betreffenden Verbindung beteiligten anderen ISDN-Teilnehmeranschlusses Asl durchgeschaltet, wobei in dem in der Zeichnung skizzierten Ausführungsbeispiel die beiden Supermultiplex-Teilschienen SMSa und SMSz über eine Umschalteinrichtung z—z direkt miteinander verbunden sind; der andere Nutzkanal Bb' eines sowohl am Stream-Verkehr als auch am Burst-Verkehr teilnehmenden ISDN-Teilnehmeranschlusses Asl ist dagegen über die Koppeleinrichtung KF mit den entsprechenden jeweils anderen Nutzkanälen Bb'' weitere ISDN-Teilnehmeranschlüsse Asl dauernd zu einem dem Burst-Verkehr dienenden Netzwerk (Local Area Network) zusammengeschaltet. In dem in der Zeichnung skizzierten Ausführungsbeispiel eines solchen Telekommunikationssystems kann dazu die Umsteuereinrichtung z—z von einer zusätzlichen Spalte Z des Haltespeichers HS her umgesteuert werden, so daß dann die beiden Teilschienen SMSa und SMSz nicht mehr direkt, sondern über einen eine zusätzliche Speicherzelle ZSZ enthaltenden Zwischenspeicherzweig miteinander verbunden sind. In den den einzelnen B-Kanälen der ISDN-Teilnehmeranschlüsse Asl zugeordneten Speicherzeilen des ebenso wie die Koppelschalter ZK und D zyklisch betriebenen Haltespeichers HS ist in der zusätzlichen Spalte Z jeweils markiert, ob der betreffende B-Kanal in das dem Burst-Verkehr dienende Netzwerk (Local Area Network) einbezogen ist; durch eine solche Markierung wird, wie dies auch in der Zeichnung angedeutet ist, ggf. die Umschalteeinrichtung z—z umgeschaltet.

Wenn nun im Verlauf eines Auslesezyklus' eine solche Markierung, d.h. ein entsprechendes Umsteuerbit, gelesen wird, wird in die Verbindung zwischen Supermultiplex-Teilschiene SMSa und Supermultiplex-Teilschiene SMSz die zusätzliche Speicherzelle ZSZ eingefügt.

Solange keiner der Burstverkehr-Anschlüsse sendet, ist diese zusätzliche Speicherzelle ZSZ leer, und es geschieht nichts weiter.

Würde dagegen von einem ISDN-Teilnehmeranschluß Asl her in einem Burstverkehr-Kanal Bb' ein Digitalwort gesendet und wie üblich im Wortspeicher WS zwischengespeichert, so wird im folgenden Lesezyklus dieses Digitalwort — bei von der Zusatzspalte Z des Haltespeichers HS her umgesteuerter Umschalteinrichtung z—z — in die zusätzliche Speicherzelle ZSZ übertragen.

Die zusätzliche Speicherzelle ZSZ meldet daraufhin an ihrem Ausgang W, daß sie ein Digitalwort empfangen hat, woraufhin zum einen in der betreffenden Zeile des Haltespeichers HS in einer weiteren Spalte A ein "Aktiv-Bit" notiert wird und außerdem durch Betätigung eines in den Zwischenspeicherzweig eingefügten Schalters w verhindert wird, daß weitere Burstverkehr-Kanäle die zusätzliche Speicherzelle ZSZ belegen können.

Anschließend wird das in der zusätzlichen Speicherzelle ZSZ gespeicherte Wort an alle in der Spalte Z des Haltespeichers HS markierten Nutzkanäle verteilt, indem die Umschalteinrichtung z—z den Ausgang der zusätzlichen Speicherzelle ZSZ jeweils zeitlagenrichtig mit der Supermultiplex-Teilschiene SMSz verbindet. Am Ende des Zyklus' erfolgt schließlich die Abgabe des betreffenden Digitalwortes an den Nutzkanal des Ursprungs-Teilnehmeranschlusses, verbunden mit dem Einschreiben des bereits im Wortspeicher WS stehenden nächsten Digitalworts in die zusätzliche Speicherzelle ZSZ (unter Löschung des alten Digitalworts), was in dem in der Zeichnung skizzierten Ausführungsbeispiel über den im Zwischenspeicherzweig liegenden, von der genannten weiteren Spalte A des Haltespeichers HS steuerbaren Schalter a vor sich geht.

Ist der Burst beendet, so wird die zusätzliche Speicherzelle ZSZ leer, woraufhin in der betreffenden Speicherzeile des Haltespeichers HS das in der genannten weiteren Spalte A notierte "Aktiv"-Bit gelöscht wird. Danach kann dann ein Burst eines anderen Burstverkehr-Kanals Bb' aufgenommen werden.

Kommt es, während ein Burstverkehr-Kanal aktiv ist, zu einem Zugriffsversuch eines weiteren Burstverkehr-Kanals, so erkennt letzterer an den empfangenen Digitalworten, daß es sich nicht um seine eigene Sendung handelt, und vermag daraufhin, wie beim CSMA/CD-Verfahren üblich und hier daher nicht weiter erläuterungsbedürftig, seinen Zugriffsversuch abzubrechen.

Mit der in der vorstehend erläuterten Weise erfindungsgemäß erweiterten Nutzung des ISDN-Koppelnetzes für Burst-Verkehr tritt für diesen eine Verzögerung um zwei 125-us-Zyklen ein, die aber die Kollisionserkennung unbeeinträchtigt läßt.

Der Vorteil des erfundenen Telekommunikationsystems wird im diensteintegrierenden Digitalnetz (ISDN), in dem je Anschlußleitung zwei Nutzkanäle zur Verfügung gestellt werden, besonders wirksam, weil es damit möglich ist, ohne Erweiterung des vorhandenen Leitungsnetzes von ein und demselben Arbeitsplatz aus sowohl Stream-Verkehr als auch Burst-Verkehr abzuwickeln, ohne daß das ISDN durch hohe Verbindungshäufigkeiten überlastet wird. Zugleich bleibt die Möglichkeit offen, für einen Verkehr zwischen zentralen Funktionsblöcken, sog. "Servern", bei denen der Burst-Verkehr zusätzlich noch mit hohem Datendurchsatz verbunden ist, lokal begrenzt und somit ohne größeren Aufwand ein noch leistungsfähigeres Local Area Network (LAN) neu zu verlegen.

**Patentansprüche**

1. Telekommunikationssystem sowohl für sog. Stream-Verkehr, insbesondere zwischen Geräten zur Sprach-, Text- und/oder Bildkommunikation, als auch für sog. Burst-Verkehr, insbesondere zwischen Geräten zur Daten- und/oder Textverarbeitung, dadurch gekennzeichnet, daß es Mittel aufweist, die bewirken, daß in einem diensteintegrierenden Digitalnetz (ISDN) mit an eine Digitalvermittlungsstelle (DVSt) angeschlossenen, durch Zweikanal-Basisanschlüsse gegebenen ISDN-Teilnehmeranschlüssen (Asl) jeweils der eine (Bs') der beiden Nutzkanäle (Bs, Bb) eines ISDN-Teilnehmeranschlusses (Asl) zur fallweisen Abwicklung von Stream-Verkehrsverbindungen in einer Koppeleinrichtung (KF) der Digitalvermittlungsstelle (DVSt) jeweils für die Dauer der betreffenden Verbindung zu dem entsprechenden jeweils einen Nutzkanal (Bs'') des an der betreffenden Verbindung beteiligten anderen ISDN-Teilnehmeranschlusses (Asl) durchgeschaltet wird und der andere (Bb') der beiden Nutzkanäle (Bs, Bb) des ISDN-Teilnehmeranschlusses (Asl) über eine Koppeleinrichtung (KF) der Digitalvermittlungsstelle (DVSt) mit den entsprechenden jeweils anderen Nutzkanälen (Bb'') weiterer ISDN-Teilnehmeranschlüsse (Asl) dauernd zu einem dem Burst-Verkehr dienenden Netzwerk zusammengeschaltet ist.

2. Telekommunikationssystem nach Anspruch 1, dadurch gekennzeichnet, daß in einer Zeitmultiplex-Digitalvermittlungsstelle (DVSt) mit einer Zeitkoppelstufe (KF) mit einem Wortspeicher (WS), dessen einzelne Speicherzellen (WSZ) einerseits zyklisch angesteuert werden und andererseits von einem Haltespeicher (HS) adressenabhängig gesteuert mit einer ihrerseits zyklisch angesteuerten Supermultiplexschiene (SMS) verbindbar sind, die Supermultiplexschiene in zwei Teilschienen (SMSa, SMSz) aufgespalten ist, mit deren einer (SMSa) die Wortspeicherzellen (WSZ) vom Haltespeicher (HS) adressenabhängig gesteuert verbindbar sind und deren andere (SMSz) zyklisch angesteuert ist, wobei die beiden Teilschienen (SMSa, SMSz) über eine von einer zusätzlichen Spalte (Z) des Haltespeichers (HS) her ansteuerbaren Umschalteinrichtung (z—z) einerseits direkt und andererseits über einen eine zusätzliche Speicherzelle (ZSZ) enthaltenden Zwischenspeicherzweig miteinander verbindbar sind.

**Revendications**

1. Système de télécommunications à la fois pour ce qu'on appelle le trafic en mode continu, notamment entre des appareils pour la transmission de signaux vocaux, de textes et/ou d'images, et pour ce qu'on appelle le trafic en mode paquet, notamment entre des appareils utilisés pour le traitement de données et/ou de textes, caractérisé par le fait qu'il comporte des moyens agissant en sorte que, dans un réseau numérique à intégration des services (ISDN) comportant des branchements d'abonnés ISDN (Asl), raccordés à un central de commutation numérique (DVSt) et formé par des branchements d'accès de base à deux canaux, respectivement l'un (Bs') des deux canaux utiles (Bs, Bb) d'un branchement d'abonné ISDN (Asl) est interconnecté directement, pour l'acheminement, adapté au cas considéré, de liaisons de trafic en mode continu, dans un dispositif de couplage (KF) du central de commutation numérique (DVSt), et ce pendant la durée de la liaison considérée, respectivement à un canal utile correspondant (Bs'') de l'autre branchement d'abonné ISDN (Asl) participant à la liaison considérée, et que l'autre (Bb') des deux canaux utiles (Bs, Bb) du branchement d'abonné ISDN (Asl) est interconnecté en permanence, par l'intermédiaire d'un dispositif de couplage (KF) du central de commutation numérique (DVSt), respectivement aux autres canaux utiles correspondants (Bb'') d'autres branchements d'abonnés ISDN (Asl), pour former un réseau utilisé pour le trafic en mode paquet.

2. Système de télécommunications suivant la revendication 1, caractérisé par le fait que dans un central numérique de multiplexage temporel (DVSt) comportant un étage de couplage temporel (KF) pourvu d'une mémoire de mots (WS), dont les différentes cellules (WSZ) d'une part sont commandées cycliquement et d'autre part peuvent être reliées, d'une manière commandée en fonction d'une adresse par une mémoire de maintien (HS), à un super-bus de multiplexage (SMS), qui, pour sa part, est commandé cycliquement et est subdivisé en deux bus partiels (DSMSa, DSMSz), dont l'un (SMSa) peut être relié aux cellules (WSZ) de la mémoire de mots, d'une manière commandée en fonction de l'adresse par la mémoire de maintien (HS), et dont l'autre (SMSz) est commandé cycliquement, les deux bus partiels (SMSa, SMSz) pouvant être reliés entre eux, par l'intermédiaire d'un dispositif de commutation (z—z) pouvant être commandé à partir d'une colonne supplémentaire (Z) de la mémoire de maintien (HS), d'une part directement, et, d'autre part, par l'intermédiaire d'une branche de mémoire intermédiaire contenant une cellule de mémoire supplémentaire (ZSZ).

**Claims**

1. Telecommunication system both for so-called stream traffic, particularly between devices for voice, text and/or picture communication, and for so-called burst traffic, particularly between devices for data and/or text processing, characterized in that it exhibits means which have the effect that in an integrated-services digital network (ISDN) with ISDN subscriber lines (Asl), which are connected to a digital switching centre (DVSt) and are given by two-channel basic accesses, in each case one (Bs') of the two user information channels (Bs, Bb) of an ISDN subscriber line (Asl) is switched through, for the case-by-case handling of stream traffic connections in a switching device (KF) of the digital switching centre (DVSt), in each case for the duration of the corresponding connection, to the one respective corresponding user information channel (Bs'') of the other ISDN subscriber line (Asl) involved in the connection concerned and the other one (Bb') of the two user information channels (Bs, Bb) of the ISDN subscriber line (Asl) is permanently connected together with the other respective corresponding user information channels (Bb'') of further ISDN subscriber lines (Asl) via a switching device (KF) of the digital switching centre (DVSt) to form a network used for burst traffic.

2. Telecommunication system according to Claim 1, characterized in that in a time-division multiplex digital switching centre (DVSt) with a time-division multiplex switching stage (KF) with a word store (WS), the individual storage cells (WSZ) of which are, on the one hand, cyclically selected and, on the other hand, can be connected, controlled address-dependently by a hold latch (HS), to a supermultiplex bus (SMS) which, in turn, is cyclically selected, the supermultiplex bus is split into two part-busses (SMSa, SMSz) to one of which (SMSa) the word storage cells (WSZ) can be connected, controlled address-dependently by the hold latch (HS), and the other one of which (SMSz) is cyclically selected, in which arrangement the two part-busses (SMSa, SMSz) can be connected to one another, on the one hand directly via a switch-over device (z—z) which can be actuated by an additional column (Z) of the hold latch (HS) and, on the other hand, via an intermediate storage branch containing an additional storage cell (ZSZ).